# EUROPÄISCHE PATENTSCHRIFT

(11) **EP 3 250 444 B1**
(45) Veröffentlichungstag und Bekanntmachung des Hinweises auf die Patenterteilung: **10.03.2021**
(21) Anmeldenummer: 16701111.3
(22) Anmeldetag: 19.01.2016
(51) Int. Cl.: B62D 15/02, B60W 30/06, G06Q 10/04, G08G 1/14

(54) **VALET-PARKING VERFAHREN**
VALET PARKING METHOD
PROCÉDÉ DE VOITURIER AUTOMATIQUE

(30) Priorität: 26.01.2015 DE 102015201205
(43) Veröffentlichungstag der Anmeldung: 06.12.2017
(73) Patentinhaber: Robert Bosch GmbH, 70442 Stuttgart (DE)
(72) Erfinder: SCHERL, Michael, 74321 Bietigheim (DE); VOELZ, Benjamin, 71229 Leonberg (DE); HEIGELE, Christian, 8405 Winterthur (CH); MIELENZ, Holger, 73760 Ostfildern (DE); LEHNER, Philipp, 75417 Muehlacker (DE)
(86) Internationale Anmeldenummer: PCT/EP2016/050955
(87) Internationale Veröffentlichungsnummer: WO 2016/120118

(56) Entgegenhaltungen:
- EP-A1- 1 681 663
- WO-A2-2009/145552
- WO-A2-2010/060720
- WO-A2-2012/058022
- CN-A- 103 269 107
- DE-A1-102010 003 887
- DE-A1-102011 088 809
- DE-A1-102012 024 865
- DE-C1- 19 519 107
- US-A1- 2003 182 183
- US-A1- 2010 256 835
- US-A1- 2012 068 858
- US-A1- 2012 188 100
- US-B1- 6 426 708
- US-B1- 9 141 112

## Beschreibung

### Stand der Technik

Valet Parking Systeme sind vollautomatische Fahrerassistenzsysteme für Parkieranlagen, die es zumeist über die Kommunikation mit einem Parkplatzmanagement-System (z. B. einem Server) ermöglichen, ein Fahrzeug ohne die Einwirkung eines Fahrers von einem Einfahrbereich einer Parkieranlage zu einem Parkfläche zu fahren, um das Fahrzeug dort dauerhaft abzustellen. Der Vorteil von Valet Parking Systemen liegt darin, dass im Gegensatz zu automatischen Parkieranlagen mit Fördersystemen bestehende Anlagen nicht weiter ausgerüstet werden müssen, um dem Fahrer den gesteigerten Komfort zu ermöglichen und ihn von der Parkplatzsuche zu befreien. Weiterhin bekannt sind Systeme, die es dem Fahrer erlauben, sein Fahrzeug über Distanz zu rufen, so dass es vollautomatisch zu einer vorgegebenen Abholposition zurückkehrt, wo es vom Fahrer in Empfang genommen werden kann.

Aus dem Stand der Technik sind verschiedene Verfahren zur Nutzung einer Parkfläche bekannt. Dabei ist es unter anderem bekannt, dass Fahrzeugen. die auf der Parkfläche geparkt werden sollen jeweils ein Stellplatz zugeteilt wird, wobei die Fahrzeuge den jeweils zugeteilten Stellplatz autonom ansteuern. So beschreibt die DE 10 2010 033 215 A1 ein Verfahren zur Unterstützung eines Einparkvorgangs in einem Parkhaus unter Verwendung eines Einparksystems in einem Fahrzeug. Um ein vereinfachtes und schnelles Auffinden eines freien Parkplatzes zu ermöglichen, werden dem Einparksystem bei der Einfahrt und/oder während des Aufenthalts im Parkhaus Informationen über das Parkhaus bereitgestellt, wobei das Einparksystem durch Auswerten der bereitgestellten Informationen über das Parkhaus Steuerdaten für das Fahrzeug erzeugt und ausgibt, wobei das Fahrzeug basierend auf den Steuerdaten automatisch durch das Parkhaus bewegt wird und/oder die Steuerdaten als Navigationshinweise an den Fahrer ausgegeben werden.

Ferner sind Vorrichtungen bekannt, in denen ein Umsetzen eines Fahrzeuges basierend auf einem Ladebedarf und somit einer verfügbaren Reichweite des Fahrzeuges erfolgt. Auch ist die Zuteilung einer Parkmöglichkeit abhängig von der verfügbaren Reichweite eines Elektrofahrzeuges bekannt.

Die DE 20 2009 000 259 U1 beschreibt hierzu ein Ladeassistenzsystem umfassend eine Sende- und eine Empfangseinheit, die eine Kommunikation mit einem Ladeortsystem erlaubt, eine Anzeigeeinheit, auf der dem Benutzer Daten optisch und/oder akustisch angezeigt werden, eine Eingabeeinheit, mit der der Benutzer Daten in das Ladeassistenzsystem eingeben kann und eine Recheneinheit, die unter Berücksichtigung vorgebbarer Parameter Ladeorte auswählt.

Die DE 10 2011 088 809 A1 beschreibt ein Verfahren zum Anfordern einer Leitinformation zu einer Parkmöglichkeit mit Lademöglichkeit zum Laden eines Elektrofahrzeugs. Dabei wird ein Anforderungssignal zum Anfordern der Leitinformation unter Verwendung des zumindest einen Zusatzbedürfnisses und eines Standorts und einer Reichweite des Elektrofahrzeugs gesendet.

WO2010060720 offenbart eine Ladestation für eine Mehrzahl von elektrisch betriebenen selbstgesteuerten Fahrzeugen, wobei ein Ladeort durch ein Ladeassistenzsystem durch Benutzung von Fahrzeugparametern wie Fahrzeugdimensionen, -typ, -ladekontakttyp, Ladezustand und/oder gewünschte Verweildauer ausgewählt wird.

DE102012024865 offenbart einen Parkvorgang eines autonomen Fahrzeugs. Der Parkvorgang wird mit einem Befüllvorgang kombiniert.

### Offenbarung der Erfindung

Das vorliegende Erfindung hat zur Aufgabe, die Zielposition eines einfahrenden Fahrzeuges derart auszuwählen, dass die Parkkapazität einer Parkfläche optimiert wird, wobei als Lösungsansatz das Parken in "zweiter und höherer Reihe" umgesetzt wird und somit ein häufiges Umparken eines Fahrzeuges nötig werden kann.

Es wird ein Verfahren zur optimierten Nutzung einer Parkfläche vorgeschlagen.

Dabei wird Fahrzeugen, die auf der Parkfläche geparkt werden sollen, jeweils ein Stellplatz zugeteilt, wobei die Fahrzeuge den jeweils zugeteilten Stellplatz insbesondere autonom ansteuern. Ferner können Fahrzeuge einen Wechsel des Stellplatzes ausführen, um eine verbesserte Nutzung der verfügbaren Parkfläche oder eine schnellere Verfügbarkeit des Fahrzeuges zu ermöglichen, wodurch insgesamt eine optimierte Nutzung der Parkfläche erzielt wird. Erfindungsgemäß wird dabei zunächst eine verfügbare Reichweite der jeweiligen Fahrzeuge ermittelt, und die Zuteilung des jeweiligen Stellplatzes und/oder ein möglicher Wechsel des Stellplatzes werden von der verfügbaren Reichweite der einzelnen Fahrzeuge abhängig gemacht. Die verfügbare Reichweite eines Fahrzeuges wird insbesondere durch eine Restkraftstoffmenge oder einen Ladezustand des Fahrzeuges beschrieben.

Es wird erfindungsgemäß ein Verfahren zur optimierten Nutzung einer Parkfläche vorgeschlagen, wobei Fahrzeugen, die auf der Parkfläche geparkt werden sollen, jeweils ein freier Stellplatz zugeteilt wird. Die Fahrzeuge steuern den jeweils zugeteilten Stellplatz, insbesondere autonom, an.

Eine optimierte Nutzung einer Parkfläche im Sinne der vorliegenden Erfindung bedeutet insbesondere, dass die zum Parken zur Verfügung stehende Fläche mit einer maximalen Anzahl von Fahrzeugen belegt werden kann und/oder dass die Fahrzeuge derart platziert werden, dass eine Abholdauer, also die Zeit, die die Fahrzeuge von ihrer jeweiligen Parkposition zu einer definierten Abholposition unterwegs sind minimiert wird. Es können zusätzlich weitere Größen optimiert werde, wie z.B. die Anzahl von durchgeführten Umparkvorgängen, der Kraftstoffverbrauch und/oder die von den Fahrzeugen zurückgelegten Wege innerhalb der Parkfläche.

Autonom im Sinne der vorliegenden Erfindung bedeutet insbesondere, dass das Fahrzeug selbstständig, also ohne einen Eingriff eines Fahrers, navigiert oder fährt. Das Fahrzeug fährt also selbstständig auf der Parkfläche, ohne dass ein Fahrer hierfür das Fahrzeug steuern müsste. Der Fahrer muss sich selbst nicht mehr im Fahrzeug befinden. Ein solch autonom fahrendes Fahrzeug, das automatisch ein- und ausparken kann, wird beispielsweise als ein AVP-Fahrzeug bezeichnet. AVP steht hierbei für "automatic valet parking" und kann mit "automatischer Parkvorgang" übersetzt werden. Fahrzeuge, die diese AVP-Funktionalität nicht aufweisen, werden beispielsweise als normale Fahrzeuge bezeichnet.

Während der Parkdauer auf der Parkfläche ist vorgesehen, dass die abgestellten Fahrzeuge, insbesondere autonom, einen Wechsel des Stellplatzes ausführen, um eine verbesserte Nutzung der verfügbaren Parkfläche oder eine schnellere Verfügbarkeit eines Fahrzeuges zu ermöglichen. Dieses automatische Umparken kann bei Bedarf erfolgen, um eine optimierte Nutzung der Parkfläche zu ermöglichen.

Erfindungsgemäß wird dabei für jedes Fahrzeug eine verfügbare Reichweite ermittelt und die Zuteilung des jeweiligen Stellplatzes und/oder ein möglicher Umparkvorgang abhängig von der verfügbaren Reichweite der einzelnen Fahrzeuge durchgeführt.

Bei jedem Neueintreffen eines Fahrzeuges werden die aktuellen Parkplatzpositionen der auf der Parkfläche aktuell vorhandenen, also bereits abgestellten, Fahrzeuge dahingehend überprüft, dass eine Optimierung der Gesamtparkplatznutzung bezüglich Nutzung des zur Verfügung stehenden Parkraums sowie z.B. der Dauer von Abholvorgängen durchgeführt werden kann. Dazu können z.B. zur Verfügung stehenden Informationen bezüglich festgelegter Abholtermine und Abholorte zusätzlich berücksichtigt werden.

Bevorzugt wird die verfügbare Reichweite eines Fahrzeuges durch eine Restkraftstoffmenge und/oder einen Ladezustand des Fahrzeuges beschrieben. Bei einem Fahrzeug, das durch einen Verbrennungsmotor angetrieben wird, ist die restliche verfügbare Reichweite, die dieses Fahrzeug zurücklegen kann, maßgeblich durch die im Tank befindliche Restkraftstoffmenge bestimmt. Bei einem Fahrzeug mit Hybridantrieb ist alternativ oder zusätzlich der Ladezustand der Batterie ausschlaggebend. Bei einem Fahrzeug mit Elektroantrieb ist der aktuelle Ladezustand der Batterie maßgeblich für die restliche verfügbare Reichweite, die dieses Fahrzeug zurücklegen kann.

Erfindungsgemäß wird die verfügbare Reichweite eines Fahrzeugs durch ein Berechnungsmodell zur Ermittlung des Kraftstoffverbrauchs und/oder des Stromverbrauchs eines Fahrzeuges von einer gegebenen Startposition bis zur Erreichung des Zielpunktes beispielsweise eines Umparkvorganges des Fahrzeugs vor und/oder nach einem Umparkvorgang neu bestimmt. Das Berechnungsmodell zur Ermittlung des Kraftstoffverbrauchs und/oder des Stromverbrauchs kann dazu beispielsweise die zurückzulegende Wegstrecke, und zusätzlich aktuelle Umgebungsbedingungen, wie Temperatur und/oder Zustand der Fahrbahn berücksichtigen, indem entsprechende Daten vom Fahrzeug und/oder von einer zentralen Steuerungseinheit der Parkfläche zur Verfügung gestellt werden. Außerdem können vergangene und bevorstehende Standzeiten des Fahrzeugs berücksichtigt werden sowie der zeitliche Verlauf der Umgebungsbedingungen, wie beispielsweise der Temperatur. Diese zeitlichen Verläufe können insbesondere den Ladezustand und den Stromverbrauch eines ganz oder unterstützend elektrisch angetriebenen Fahrzeugs beeinflussen.

Auch wird erfindungsgemäß das Berechnungsmodell zur Ermittlung des Kraftstoffverbrauchs und/oder des Stromverbrauchs abhängig vom Fahrzeugtyp gewählt, so dass vorteilhaft fahrzeugtypbedingte Unterschiede im Kraftstoffverbrauch bzw. Stromverbrauch berücksichtigt werden können.

Insbesondere ist vorgesehen, dass bei der Durchführung des erfindungsgemäßen Verfahrens zur optimierten Nutzung einer Parkfläche die geplante Rest-Parkdauer eines jeden geparkten Fahrzeuges berücksichtigt wird. Damit können beispielsweise Umparkvorgänge vorteilhaft derart geplant werden, dass Fahrzeuge, die eine kurze geplante Rest-Parkdauer haben, näher an einer Abholzone geparkt werden, so dass die Verbringung zur Abholzone nach Ablauf der Parkdauer möglichst mit kurzen Wegen und einer geringen Anzahl von nötigen Umparkvorgängen anderer Fahrzeuge erfolgen kann.

Insbesondere ist vorgesehen, dass bei der Durchführung des erfindungsgemäßen Verfahrens zur optimierten Nutzung einer Parkfläche die Geometrie der Parkfläche berücksichtigt wird. Dabei werden die natürlichen Begrenzungen der Parkfläche, wie beispielsweise Zäune oder Mauern berücksichtigt, außerdem werden feststehende Hindernisse wie zum Beispiel Stützpfeiler oder Bäume bei der Durchführung des Verfahrens mit einbezogen.

Ebenso können vorgesehene Fahrtrichtungen (Fahrspuren) und/oder Gehwege für Fußgänger berücksichtigt werden.

Insbesondere ist vorgesehen, dass bei der Durchführung des erfindungsgemäßen Verfahrens zur optimierten Nutzung einer Parkfläche die Fahrzeuggeometrie eines jeden geparkten Fahrzeuges berücksichtigt wird.

Zur Optimierung bzw. Minimierung der Anzahl der Umparkvorgänge können bekannte Berechnungsverfahren eingesetzt werden wie beispielsweise einem Greedy-Algorithmus oder dynamische Programmierung oder genetische Programmierung. In einem weiteren Schritt kann Optimierung noch mit der Randbedingung durchgeführt werden, dass nicht nur die Anzahl der Umparkvorgänge sondern auch noch die insgesamt zu fahrende Wegstrecke optimiert wird. Als untergeordnete Optimierungsgröße kann dabei berücksichtigt werden, dass die Restreichweite eines jeden Fahrzeuges stets noch ausreicht, um noch eine vorher definierte Reststrecke abzufahren. Eine solche Reststrecke kann z.B. die Distanz von der Parkfläche zur nächstliegenden Tankstelle bzw. Ladestation umfassen. Ferner kann der Fahrer nach Übernahme des Fahrzeuges darauf hingewiesen werden, dass er das Fahrzeug wieder betanken sollte.

In einer weiteren bevorzugten Ausführung der Erfindung können Kennzahlen eines Fahrzeugs, insbesondere der Fahrzeugtyp und/oder die Fahrzeuggeometrie und/oder die Restkraftstoffmenge und/oder einen Ladezustand und/oder die geplante Parkdauer, vorab an ein Valet Parking System übermittelt werden. Weiterhin kann eine Reduktion der Dauer eines kollektiven Umparkmanövers (mehrere Fahrzeuge müssen bewegt werden) darüber erreicht werden, dass der Betreiber der Parkfläche einen Buchungsservice anbietet und die Fahrzeuge hierüber mit den relevanten Kennzahlen angemeldet werden, noch bevor sie die Abgabezone der Parkfläche erreichen. Damit kann vorteilhaft erreicht werden, dass die optimierte Zielposition eines Fahrzeuges im "Park-Kollektiv" (bisher vorhandene Fahrzeuge auf einer zu beparkenden Fäche) vorab ermittelt und die relevanten Um- bzw. Ausparkvorgänge bereits vor der tatsächlichen Abgabe des Fahrzeugs eingeleitet werden können, so dass das neu eintreffende Fahrzeug zeitoptimiert abgestellt werden kann.

Nach einem weiteren Aspekt der Erfindung wird ein Valet Parking System vorgeschlagen, das ausgebildet ist, das erfindungsgemäße Verfahrens zur optimierten Nutzung einer Parkfläche wie oben beschrieben auszuführen. Dazu kann das Valet Parking System eine zentrale Steuerungseinheit aufweisen, die ausgebildet ist, die Eintreffen eines Fahrzeugs, dessen Restreichweite zu ermitteln. Dazu kann beispielsweise vorgesehen sein, dass das Fahrzeug über geeignete Kommunikationsmittel seine aktuelle Restkraftstoffmenge bzw. seinen Ladezustand an die zentrale Steuerungseinheit übermittelt. Mittels eines, insbesondere an den jeweiligen Fahrzeugtyp angepassten, Berechnungsmodells kann die zentrale Steuerungseinheit die Restreichweite jedes Fahrzeugs zu jedem Zeitpunkt der Parkdauer ermitteln, und die Zuteilung des jeweiligen Stellplatzes sowie mögliche Umparkvorgänge entsprechend planen.

Das Valet Parking System kann insbesondere eine Einrichtung zur Betankung und/oder zur Aufladung eines Fahrzeugs umfassen, so kann der Fahrer nach Abholung seines Fahrzeugs unmittelbar Kraftstoff nachtanken. Auch ist denkbar, dass ein elektrisch betriebenes Fahrzeug, rechtzeitig vor einem geplanten Abholtermin autonom eine Einrichtung zum Aufladen seiner Batterie bzw. seines Akkus (Ladestation) anfährt und dort aufgeladen wird, so dass das Fahrzeug bei Abholung mit vollem Ladezustand an den Fahrer übergeben werden kann.

Das erfindungsgemäße Verfahren und System ermöglicht die Optimierung der Nutzung einer gegebenen Parkfläche für Valet-Parking Systeme dahingehend, dass eine Maximierung der Parkkapazitäten unter Berücksichtigung der Restreichweite, insbesondere der noch im Fahrzeug vorhandenen Kraftstoffmenge bzw. des aktuellen Ladezustands des Fahrzeugs, erzielt wird. Gegenwärtig besteht ein wichtiger Lösungsansatz eines Valet-Parking Systems zur Maximierung der Parkkapazität in einem dichten Verparken der Fahrzeuge, so dass diese nur durch Bewegen anderer Fahrzeuge wieder ausgeparkt werden können. Da ein solches Umparken für abgestellte Fahrzeuge durchaus mehrmals (am Tag) über die Parkdauer (z.B. Wochen bei einem am Flughafen abgestellten Fahrzeug) erfolgen kann, muss die im Fahrzeug noch vorhandene Kraftstoffmenge bzw. der Ladezustand des Fahrzeugs bei der Auswahl eines Parkplatzes berücksichtigt werden.

Die vorliegende Erfindungsmeldung beschreibt somit ein Verfahren zur optimierten Auswahl einer Zielposition in Abhängigkeit der zu erwartenden Parkdauer und der Restreichweite. Damit können Systemabbrüche eines automatischen Valet Parking Vorgangs durch liegengebliebene Fahrzeuge, deren Tank oder Batterie leer ist, vermieden werden.

Kurze Beschreibung der Zeichnungen
Figur 1 stellt schematisch einen Valet-Parking Vorgang dar, wobei in Figur 1 a) die Situation bei der Abgabe des Fahrzeugs darstellt und Figur 1 b) den Abholvorgang darstellt.
Figur 2 stellt schematisch einen Umparkvorgang als Teil des erfindungsgemäßen Verfahrens dar.

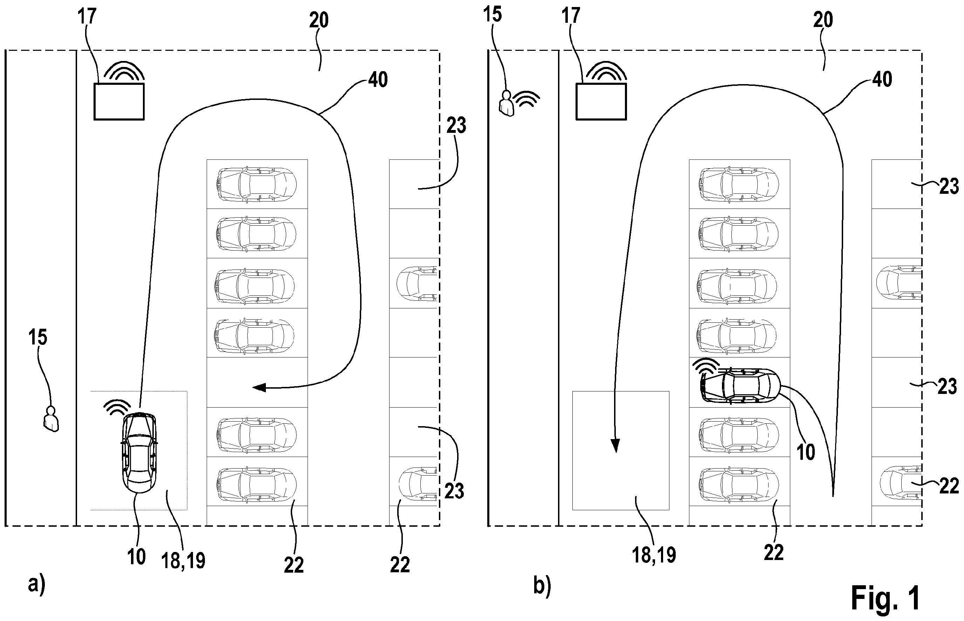

In Figur 1 ist ein Ausschnitt einer Parkfläche 20 mit einer Vielzahl von Stellplätzen 23 in einer schematischen Ansicht von oben dargestellt. Die schematische Darstellung zeigt dabei eine Parkfläche 20 als offene Fläche, wobei Erfindung ebenso auf Parkhäuser, Garagenhöfe und Tiefgaragen anwendbar ist.

Die Parkfläche 20 umfasst eine Übergabezone 18, an der ein Fahrzeug 10 an den Betreiber des Parkraums 20 übergeben werden kann. Dazu fährt der Fahrer 15 des Fahrzeugs 10 sein Fahrzeug 10 in die Übergabezone 18, verlässt sein Fahrzeug 10 und übergibt sein Fahrzeug 10 an den Betreiber der Parkfläche 20.

Nach der Übergabe des Fahrzeugs 10 an den Betreiber der Parkfläche 20 wird dem Fahrzeug 10 durch eine zentrale Steuerungseinheit 17 aus den möglichen Stellplätzen 23 ein freier Stellplatz 24 als Parkposition zugewiesen. Bereits belegte Stellplätze sind in der Figur 1 mit dem Bezugszeichen 22 gekennzeichnet.

Nach Zuweisung der Parkposition wird das Fahrzeug 10 auf den als zugewiesenen freien Stellplatz 24 bewegt. Das Fahrzeug 10 ist eingerichtet, ein Fahrmanöver autonom mithilfe eines Parkassistenzsystems auszuführen. Der zentralen Steuerungseinheit 17 wird Zugriff auf das Parkassistenzsystem gewährt, so dass sich das Fahrzeug 10 auf dem Parkplatz 10 autonom bewegen kann und selbstständig die Parkposition 24 ansteuert. Beispielsweise werden von der zentralen Steuerungseinheit 17 entsprechende Informationen an das Fahrzeug 10 übermittelt, so dass das Fahrzeug 10 autonom entlang einer auf den Informationen basierenden Trajektorie 40 innerhalb des Parkraums 20 geführt werden kann. Diese Situation ist in Figur 1 a) dargestellt.

Möchte der Fahrer 15 sein Fahrzeug 10 wieder abholen, wird dem Parkassistenzsystem des Fahrzeugs 10 von der zentralen Steuerungseinheit 17 der Wunsch des Fahrers übermittelt. Dazu kann der Fahrer beispielsweise mittels einer Smartphone-Applikation seine Absicht der zentralen Steuerungseinheit 17 mitteilen, die dem Fahrzeug 10 ein Startsignal und gegebenenfalls eine Trajektorie 40 sendet. Zusätzlich können auch weitere Informationen übertragen werden, beispielsweise die Position der gewünschten Abholzone 19. Das Fahrzeug steuert daraufhin die Abholzone 19 selbstständig an, wobei es sich entlang einer Trajektorie 40 bewegt. Diese Situation ist in Figur 1 b) dargestellt. In der gezeigten beispielhaften Ausführung stimmen die Übergabezone 18 und die Abholzone 19 überein. Alternativ können beispielsweise räumlich getrennte Übergabezonen und Abholzonen vorgesehen sein.

Im Allgemeinen sind derartige Valet-Parking Verfahren aus dem Stand der Technik bekannt. Gemäß der vorliegenden Erfindung ist nun zusätzlich vorgesehen, dass für jedes Fahrzeug 10 eine verfügbare Reichweite durch die zentrale Steuerungseinheit 17 ermittelt wird und die Zuteilung des jeweiligen Stellplatzes 24 und/oder ein möglicher Umparkvorgang abhängig von der verfügbaren Reichweite der einzelnen, an dem jeweiligen Vorgang beteiligten Fahrzeuge durchgeführt wird.

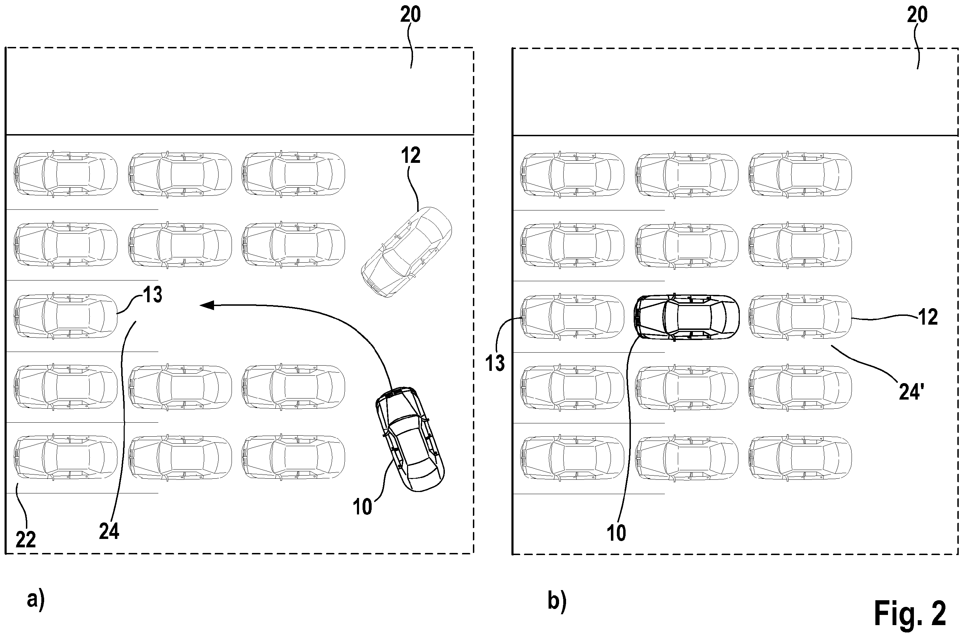

In Figur 2 ist ein Umparkvorgang dargestellt, wie er gemäß einer Ausführung eines erfindungsgemäßen Verfahrens zur optimierten Nutzung der Parkfläche 20 vorgesehen sein kann. Das neu ankommende Fahrzeug 10, im Folgenden als "Ego-Fahrzeug" bezeichnet, soll auf einem zugeteilten Stellplatz 24 abgestellt werden. Der Stellplatz 24 befindet sich in einer Mittelposition von drei Reihen geparkter Fahrzeuge. Dargestellt ist in Figur 2 a) das Einbringen des Ego-Fahrzeugs 10 den Stellplatz 24, wobei das zuvor abgestellte Fahrzeug 12 zuvor ausgeparkt worden ist, um dem Ego-Fahrzeug 10 den gezeigten Parkplatz 24 zugänglich zu machen. Ein Grund, dass Ego-Fahrzeug 10 derart zu platzieren könnte z.B. darin liegen, das die geplante Parkdauer von Fahrzeug 12 vor derjenigen des Ego-Fahrzeuges 10 abläuft, wobei das Fahrzeug 13, das sich vor dem Ego-Fahrzeug 10 befindet, noch länger parkt. Nachdem das Fahrzeug 10 seinen zugeteilten Stellplatz 24 erreicht hat und dort abgestellt ist, fährt das Fahrzeug 12 auf einen Stellplatz 24' hinter dem Fahrzeug 10. Insbesondere erfolgen alle Umparkvorgänge autonom. Erfindungsgemäß wird der Umparkvorgang abhängig von der verfügbaren Reichweite der einzelnen Fahrzeuge 10, 13 durchgeführt, wobei die verfügbare Reichweite eines Fahrzeuges 10, 13 durch eine Restkraftstoffmenge und/oder einen Ladezustand des Fahrzeuges beschrieben ist.

## Patentansprüche

1. Verfahren zur optimierten Nutzung einer Parkfläche (20), wobei Fahrzeugen (10, 12, 13), die auf der Parkfläche (20) geparkt werden sollen, jeweils ein Stellplatz (24, 24') zugeteilt wird,
wobei die Fahrzeuge den jeweils zugeteilten Stellplatz (24, 24'), insbesondere autonom, ansteuern,
wobei die Fahrzeuge (10, 12, 13) einen Wechsel des Stellplatzes (24, 24') während der Parkdauer ausführen, um eine verbesserte Nutzung der verfügbaren Parkfläche (20) zu ermöglichen,
**dadurch gekennzeichnet, dass**
mehrere Fahrzeuge bewegt werden und für jedes an einem Vorgang beteiligte Fahrzeug (10, 12, 13) eine verfügbare Reichweite ermittelt wird und ein Wechsel des Stellplatzes (24, 24') während der Parkdauer abhängig von der verfügbaren Reichweite der einzelnen an dem jeweiligen Vorgang beteiligten Fahrzeuge (10, 12, 13) durchgeführt wird, wobei die verfügbare Reichweite eines Fahrzeugs (10, 12, 13) durch ein Berechnungsmodell zur Ermittlung des Kraftstoffverbrauchs und/oder des Stromverbrauchs des Fahrzeuges (10, 12, 13) von einer Startposition (24) bis zur Erreichung des Zielpunktes (24') eines Wechsels des Stellplatzes (24, 24') des Fahrzeugs (10, 12, 13) vor und/oder nach einem einen Wechsel des Stellplatzes (24, 24') neu bestimmt wird, wobei das Berechnungsmodell abhängig vom Fahrzeugtyp ist.

2. Verfahren nach Anspruch 1, **dadurch gekennzeichnet, dass** die verfügbare Reichweite eines Fahrzeuges durch eine Restkraftstoffmenge und/oder einen Ladezustand des Fahrzeuges beschrieben ist.

3. Verfahren nach einem der Ansprüche 1 oder 2, **dadurch gekennzeichnet, dass** die geplante Rest-Parkdauer eines jeden geparkten Fahrzeuges (10, 12, 13) berücksichtigt wird.

4. Verfahren nach einem der Ansprüche 1 bis 3, **dadurch gekennzeichnet, dass** die Geometrie der Parkfläche (20) berücksichtigt wird.

5. Verfahren nach einem der Ansprüche 1 bis 4, **dadurch gekennzeichnet, dass** die Fahrzeuggeometrie eines jeden geparkten Fahrzeuges (10, 12, 13) berücksichtigt wird.

6. Verfahren nach einem der Ansprüche 1 bis 5, **dadurch gekennzeichnet, dass** die Anzahl der Umparkvorgänge mittels eines Berechungsverfahrens, insbesondere Greedy oder Dynamischer Programmierung oder genetischer Programmierung, minimiert wird.

7. Verfahren nach einem der Ansprüche 1 bis 6, **dadurch gekennzeichnet, dass** Kennzahlen eines Fahrzeugs (10, 12, 13), insbesondere der Fahrzeugtyp und/oder die Fahrzeuggeometrie und/oder die Restkraftstoffmenge und/oder die geplante Parkdauer, vorab übermittelt werden.

8. Valet Parking System, das ausgebildet ist, das Verfahren nach einem der Ansprüche 1 bis 7 auszuführen.

9. Valet Parking System nach Anspruch 8, umfassend eine Einrichtung zur Betankung und/oder zur Aufladung eines Fahrzeugs (10, 12, 13).

## Claims

1. Method for the optimized use of a parking area (20), wherein vehicles (10, 12, 13) which are intended to be parked in the parking area (20) are each allocated a parking space (24, 24'),
wherein the vehicles head for the respectively allocated parking space (24, 24'), in particular autonomously,
wherein the vehicles (10, 12, 13) carry out a change of the parking space (24, 24') during the parking duration in order to enable improved use of the available parking area (20),
**characterized in that**
a plurality of vehicles are moved and an available range is determined for each vehicle (10, 12, 13) involved in an operation, and a change of the parking space (24, 24') during the parking duration is carried out on the basis of the available range of the individual vehicles (10, 12, 13) involved in the respective operation,
wherein the available range of a vehicle (10, 12, 13) is newly determined by means of a calculation model for determining the fuel consumption and/or the power consumption of the vehicle (10, 12, 13) from a starting position (24) until reaching the target point (24') of a change of the parking space (24, 24') of the vehicle (10, 12, 13) before and/or after a change of the parking space (24, 24'), wherein the calculation model is dependent on the vehicle type.

2. Method according to Claim 1, **characterized in that** the available range of a vehicle is described by a remaining quantity of fuel and/or a state of charge of the vehicle.

3. Method according to either of Claims 1 and 2, **characterized in that** the planned remaining parking duration of each parked vehicle (10, 12, 13) is taken into account.

4. Method according to one of Claims 1 to 3, **characterized in that** the geometry of the parking area (20) is taken into account.

5. Method according to one of Claims 1 to 4, **characterized in that** the vehicle geometry of each parked vehicle (10, 12, 13) is taken into account.

6. Method according to one of Claims 1 to 5, **characterized in that** the number of re-parking operations is minimized by means of a calculation method, in particular greedy or dynamic programming or genetic programming.

7. Method according to one of Claims 1 to 6, **characterized in that** key figures of a vehicle (10, 12, 13), in particular the vehicle type and/or the vehicle geometry and/or the remaining quantity of fuel and/or the planned parking duration, are transmitted in advance.

8. Valet parking system which is designed to carry out the method according to one of Claims 1 to 7.

9. Valet parking system according to Claim 8, comprising a device for refuelling and/or charging a vehicle (10, 12, 13).

## Revendications

1. Procédé destiné à une utilisation optimisée d'une surface de stationnement (20), respectivement une place de stationnement (24, 24') étant attribuée aux véhicules (10, 12, 13) devant stationner sur la surface de stationnement (20),
les véhicules se dirigeant, en particulier de manière autonome, vers la place de stationnement (24, 24') attribuée respectivement,
les véhicules (10, 12, 13) effectuant un changement de la place de stationnement (24, 24') pendant la durée de stationnement afin de permettre une meilleure utilisation de la surface de stationnement (20) disponible,
**caractérisé en ce que**
plusieurs véhicules sont déplacés, et une autonomie disponible est déterminée pour chaque véhicule (10, 12, 13) participant à une opération, et un changement de la place de stationnement (24, 24') est effectué pendant la durée de stationnement en fonction de l'autonomie disponible des véhicules individuels (10, 12, 13) participant à l'opération respective, dans lequel l'autonomie disponible d'un véhicule (10, 12, 13) est à nouveau déterminée par un modèle de calcul permettant de déterminer la consommation de carburant et/ou la consommation électrique du véhicule (10, 12, 13) d'une position de départ (24) jusqu'à ce que le point de destination (24') d'un changement de la place de stationnement (24, 24') du véhicule (10, 12, 13) ait été atteint avant et/ou après un changement de la place de stationnement (24, 24'), le modèle de calcul dépendant du type de véhicule.

2. Procédé selon la revendication 1, **caractérisé en ce que** l'autonomie disponible d'un véhicule est décrite par une quantité de carburant restante et/ou un état de charge du véhicule.

3. Procédé selon l'une quelconque des revendications 1 et 2, **caractérisé en ce que** la durée de stationnement restante prévue de chaque véhicule en stationnement (10, 12, 13) est prise en compte.

4. Procédé selon l'une quelconque des revendications 1 à 3, **caractérisé en ce que** la géométrie de la surface de stationnement (20) est prise en compte.

5. Procédé selon l'une quelconque des revendications 1 à 4, **caractérisé en ce que** la géométrie de véhicule de chaque véhicule en stationnement (10, 12, 13) est prise en compte.

6. Procédé selon l'une quelconque des revendications 1 à 5, **caractérisé en ce que** le nombre des opérations de changement de place est minimisé au moyen d'un procédé de calcul, en particulier d'une programmation gloutonne ou dynamique ou d'une programmation génétique.

7. Procédé selon l'une quelconque des revendications 1 à 6, **caractérisé en ce que** les paramètres d'un véhicule (10, 12, 13), en particulier le type de véhicule et/ou la géométrie de véhicule et/ou la quantité de carburant restante et/ou la durée de stationnement prévue, sont transmis au préalable.

8. Système de voiturier automatique, qui est réalisé pour exécuter le procédé selon l'une quelconque des revendications 1 à 7.

9. Système de voiturier automatique selon la revendication 8, comprenant un dispositif pour ravitailler et/ou recharger un véhicule (10, 12, 13).
